# EUROPÄISCHE PATENTSCHRIFT

(11) **EP 1 337 764 B1**
(45) Veröffentlichungstag und Bekanntmachung des Hinweises auf die Patenterteilung: **06.06.2007**
(21) Anmeldenummer: 01996698.5
(22) Anmeldetag: 24.10.2001
(51) Int. Cl.: F16D 65/095, F16D 55/48

(54) **SCHEIBENBREMSE MIT SELBSTVERSTÄRKENDER WIRKUNG**
SELF-ENERGIZING DISK BRAKE
FREIN A DISQUE A EFFET AUTO-AMPLIFICATEUR DE LA FORCE DE FREINAGE

(30) Priorität: 14.11.2000 DE 10056451
(43) Veröffentlichungstag der Anmeldung: 27.08.2003
(73) Patentinhaber: ROBERT BOSCH GMBH, 70442 Stuttgart (DE)
(72) Erfinder: BAUMANN, Dietmar, 71282 Hemmingen (DE); SCHMIDT, Hanniel, 76307 Karlsbad (DE); VOLLERT, Herbert, 71665 Vaihingen/Enz (DE); KELLER, Frieder, 76698 Ubstadt-Weiher (DE)
(86) Internationale Anmeldenummer: PCT/DE2001/004041
(87) Internationale Veröffentlichungsnummer: WO 2002/040887

(56) Entgegenhaltungen:
- EP-A- 0 894 685
- DE-A- 19 810 593
- GB-A- 960 036
- US-A- 3 662 864
- US-A- 3 800 920
- US-A- 5 775 782

## Beschreibung

### Stand der Technik

Die Erfindung betrifft eine Scheibenbremse mit den Merkmalen des Oberbegriffs des Anspruchs 1, die insbesondere zu einer elektromechanischen Betätigung geeignet ist.

Heutzutage im Kraftfahrzeugbau üblicherweise verwendete Scheibenbremsen werden hydraulisch betätigt. Es sind auch schon elektromechanisch betätigte Scheibenbremsen vorgeschlagen worden, bei denen mit einem Elektromotor über ein Rotations/Translations-Umsetzungsgetriebe wie beispielsweise einen Spindeltrieb oder auch einen mit dem Elektromotor verdrehbaren Nocken ein Reibbremsbelag gegen eine Bremsscheibe drückbar ist. Elektromechanisch betätigte Scheibenbremsen haben den Nachteil, dass sie zum schnellen Zuspannen und auch Lösen, zur Erzielung einer hohen Dynamik und zum Aufbringen einer ausreichenden Bremskraft einen leistungsstarken und infolgedessen großbauenden und schweren Elektromotor benötigen. Des weiteren weist ein leistungsstarker Elektromotor eine hohe Stromaufnahme auf und belastet ein elektrisches Bordnetz des Kraftwagens.

Auch das Rotations/Translations-Umsetzungsgetriebe sowie ein evtl. zwischengeschaltetes Untersetzungsgetriebe müssen ausreichend dimensioniert sein, um die auftretenden Belastungen zu übertragen. Dies erfordert vergleichsweise große und schwere Getriebe mit infolgedessen großer Trägheit, die zu ihrer Beschleunigung wiederum ein großes Antriebsmoment benötigen. Durch den großen Bauraum lassen sich die bekannten, elektromechanisch betätigten Scheibenbremsen nur schlecht im Innenraum einer Felge eines Fahrzeugrades unterbringen, wo Scheibenbremsen üblicherweise angeordnet sind. Durch das hohe Gewicht der bekannten elektromechanischen Scheibenbremsen wird die sog. ungefederte Masse eines Fahrzeugs erhöht, was die Fahreigenschaften verschlechtert und deswegen unerwünscht ist. Diese Probleme treten bei hydraulisch betätigten Scheibenbremsen nicht auf, da hydraulisch auf kleinem Raum hohe Drücke und infolgedessen hohe Kräfte zum Zuspannen erzielbar sind.

Aus der EP 0 953 785 A2 ist eine elektromechanisch betätigte Scheibenbremse bekannt, die eine Selbstverstärkung aufweist. Mit Selbstverstärkung ist gemeint, dass eine Andruckkraft, mit der Reibbremsbeläge der Scheibenbremse gegen die Bremsscheibe gedrückt werden, größer ist als eine von einem Elektromotor aufgebrachte Betätigungskraft. Die bekannte Scheibenbremse weist eine Kreisringscheibe auf, die parallel und koaxial zur Bremsscheibe neben dieser angeordnet ist. Auf einer der Bremsscheibe zugewandten Fläche weist die Kreisringscheibe Reibbremsbeläge auf. Auf einer der Bremsscheibe abgewandten Seite weist die Kreisringscheibe Keilelemente mit jeweils zwei Keilflächen auf, wobei die beiden Keilflächen einander entgegengesetzt schräg zur Bremsscheibe verlaufen. Zur Betätigung wird die Kreisringscheibe mittels eines Elektromotors in Drehrichtung der Bremsscheibe angetrieben. Die Keilelemente laufen dabei an ortsfest gelagerten Rollen auf, wodurch die Kreisringscheibe axial in Richtung der Bremsscheibe verschoben und die Reibbremsbeläge gegen die Bremsscheibe gedrückt werden. Eine Reibung zwischen der drehenden Bremsscheibe und den Reibbremsbelägen bewirkt ein Drehmoment auf die Kreisringscheibe, die deren Keilelemente zusätzlich in Drehrichtung gegen die ortsfesten Rollen drückt. Durch eine Keilwirkung wird die Andruckkraft der Reibbremsbeläge gegen die Bremsscheibe erhöht und eine Selbstverstärkung der Scheibenbremse erzielt. Die Keilflächen und die ortsfesten Rollen bilden schräg zur Bremsscheibe verlaufende Abstützungen für die die Reibbremsbeläge aufweisende Kreisringscheibe.

Auf Grund der Selbstverstärkung reicht ein weniger leistungsstarker und damit kleinerer und leichterer Elektromotor zur Betätigung der bekannten Scheibenbremse aus. Auch ein Getriebe zum drehenden Antrieb der Kreisringscheibe kann schwächer dimensioniert und damit kleiner und leichter sowie mit geringerer Trägheit ausgebildet werden.

Zur Bremsung bei entgegengesetzt drehender Bremsscheibe, also beispielsweise bei Rückwärtsfahrt, wird die Kreisringscheibe der bekannten Scheibenbremse ebenfalls in entgegengesetzter Drehrichtung wie bei Vorwärtsfahrt angetrieben, also in derselben Drehrichtung wie die Bremsscheibe. Dadurch laufen die Keilelemente mit ihren anderen, entgegengesetzt schräg zur Bremsscheibe verlaufenden Keilflächen an den Rollen auf, wodurch in vorstehend beschriebener Weise eine Bremskraft und eine Selbstverstärkung erzielt wird. Bei der bekannten Scheibenbremse ist die Betätigungsrichtung also abhängig von der Drehrichtung der Bremsscheibe, die die Reibbremsbeläge und die Keilelemente tragende Kreisringscheibe wird zur Betätigung der Scheibenbremse immer in Drehrichtung der Bremsscheibe angetrieben. Würde die Kreisringscheibe zur Betätigung der bekannten Scheibenbremse entgegengesetzt zur Bremsscheibe drehend angetrieben, würde die von der Bremsscheibe ausgeübte Reibung über die an den feststehend gelagerten Rollen auflaufenden Keilflächen der Keilelemente die Andruckkraft und damit die Bremskraft abschwächen. Die bekannte Scheibenbremse hat mithin den Nachteil, dass ihre Betätigungsrichtung von der Drehrichtung der Bremsscheibe abhängig ist, zur Betätigung muss die Drehrichtung der Bremsscheibe bekannt sein.

Ein weiterer Nachteil tritt bei einer Bremsung am Berg auf, bei der die Kreisringscheibe zur Betätigung der Scheibenbremse in Drehrichtung der Bremsscheibe gedreht wird. Nach dem Stillstand des Fahrzeugs dreht sich auf Grund des Gefälles ein vom Fahrzeug auf die Bremsscheibe ausgeübtes Moment um, wodurch die Keilelemente von den sie abstützenden Rollen weggezogen werden und sich die Bremskraft abschwächt. Sofern der Elektromotor nicht ausreichend stark ist, um nicht nur eine ausreichende Andruckkraft der Reibbremsbeläge gegen die Bremsscheibe über die Keilelemente zu erzielen, sondern darüber hinaus die beschriebene Abschwächung zu kompensieren, kommt es beim Abbremsen eines Fahrzeugs am Berg nach Stillstand des Fahrzeugs zu einem Rückrollen.

Die US-A-5 775 782 offenbart eine hydraulisch betätigte Scheibenbremse mit einem Keilmechanismus, über den sich ein Reibbremsbelag an einem hydraulischen Bremskolben oder auf einer gegenüberliegenden Seite in einem Bremssattel abstützt. Der Keilmechanismus bewirkt keine Selbstverstärkung der Scheibenbremse, sondern er bewirkt einen beschleunigten Druckanstieg der Bremsflüssigkeit und einen beschleunigten Anstieg der Bremskraft bei Betätigung der Scheibenbremse. Dadurch wird eine Nachgiebigkeit des Bremssattels, d. h. eine elastische Aufweitung des Bremssattels bei Betätigung der Scheibenbremse und eine Aufweitung der Bremsleitungen (Hydraulikleitungen) ausgeglichen.

Die US-A-3 662 864 offenbart eine mechanisch betätigte Scheibenbremse mit einem Reibbremsbelag auf einer und zwei Reibbremsbelägen auf der anderen Seite einer Bremsscheibe. Die beiden Reibbremsbeläge auf der anderen Seite der Bremsscheibe stützen sich mit Keilen im Bremssattel ab, die einander entgegengesetzt schräg zur Bremsscheibe sind. Abhängig von der Drehrichtung der Bremsscheibe bewirkt einer der beiden Reibbremsbeläge eine Selbstverstärkung der Scheibenbremse. Der andere Reibbremsbelag bewirkt eine Selbstschwächung und verringert die Selbstverstärkung der Scheibenbremse.

Die GB-A-960 036 offenbart eine Scheibenbremse mit einem Bremsenhalter, der schräg zur Bremsscheibe angestellte Abstützflächen zum Abstützen von Reibbremsbelägen in Umfangsrichtung der Bremsscheibe aufweist. Die Abstützflächen befinden sich an den Enden der Reibbremsbeläge bzw. ihrer Belagträgerplatten. Die Betätigung der Scheibenbremse erfolgt in an sich bekannter Weise mit einem hydraulischen Bremssattel. Die schräg gestellten Abstützflächen des Bremsenhalters bewirken allenfalls an den Enden der Reibbremsbeläge ein Andrücken gegen die Bremsscheibe gegen eine ungleichmäßige Abnutzung der Reibbremsbeläge. Eine nennenswerte Selbstverstärkung der Scheibenbremse ist auf diese Weise nicht möglich.

### Vorteile der Erfindung

Die erfindungsgemäße Scheibenbremse mit den Merkmalen des Anspruchs 1 weist zwei einander entgegengesetzt schräg zur Bremsscheibe verlaufende Abstützungen für ihren Reibbremsbelag auf. Beim Andrücken des Reibbremsbelags gegen die Bremsscheibe bewirkt die Reibung zwischen drehender Bremsscheibe und Reibbremsbelag eine Kraft in Umfangsrichtung der Bremsscheibe auf den Reibbremsbelag. Diese Kraft wiederum bewirkt über eine der beiden schräg verlaufenden Abstützungen eine zusätzliche Andruckkraft des Reibbremsbelags gegen die Bremsscheibe, wodurch die Selbstverstärkung erreicht wird. Der Reibbremsbelag der erfindungsgemäßen Scheibenbremse wird von der Betätigungseinrichtung nicht in Umfangsrichtung der Bremsscheibe bewegt, sondern in etwa quer zur Bremsscheibe gegen die Bremsscheibe gedrückt. Eine Wirkungsrichtung der Betätigungseinrichtung der erfindungsgemäßen Scheibenbremse ist also quer zur Bremsscheibe. Die Bewegung des Reibbremsbelags in Umfangsrichtung, die über die schräg zur Bremsscheibe verlaufende Abstützung in vorstehend beschriebener Weise die Selbstverstärkung der Scheibenbremse bewirkt, erfolgt ausschließlich auf Grund der Reibung zwischen der drehenden Bremsscheibe und dem gegen sie gedrückten Reibbremsbelag. Auf diese Weise wird der Reibbremsbelag automatisch in die jeweilige Drehrichtung der Bremsscheibe und damit in die Richtung verschoben, die die Selbstverstärkung der Scheibenbremse bewirkt. Durch die beiden einander entgegengesetzt schräg verlaufenden Abstützungen ist die Selbstverstärkung der Scheibenbremse unabhängig von der Drehrichtung der Bremsscheibe, die drehende Bremsscheibe bewegt den Reibbremsbelag immer gegen die die Selbstverstärkung bewirkende Abstützung.

Bei einem Abbremsen am Berg kommt es nach Stillstand eines Fahrzeugs nicht zu einer Abschwächung der von der Betätigungseinrichtung der erfindungsgemäßen Scheibenbremse auf den Reibbremsbelag ausgeübten Bremskraft, da die schräg zur Bremsscheibe verlaufenden Abstützungen für den Reibbremsbelag der Wirkungsrichtung der Betätigungseinrichtung nicht entgegengerichtet sind, sondern durch die quer zur Bremsscheibe wirkende Betätigungseinrichtung unabhängig von der Wirkungsrichtung der Betätigungseinrichtung sind. Nach dem Stillstand des Fahrzeugs endet lediglich die Selbstverstärkung, es findet jedoch keine Schwächung der von der Betätigungseinrichtung auf den Reibbremsbelag ausgeübten Andruckkraft statt. Sofern die von der Betätigungseinrichtung auf den Reibbremsbelag ausgeübte Andruckkraft ohne Selbstverstärkung ausreicht, ein Rückrollen des Fahrzeugs zu verhindern, rollt das Fahrzeug am Berg nach Stillstand nicht zurück. Reicht die Andruckkraft der Betätigungseinrichtung nicht aus, bewegt die rückdrehende Bremsscheibe den Reibbremsbelag gegen die entgegengesetzt schräg verlaufende Abstützung, so dass die Selbstverstärkung wieder auftritt und ein Rückrollen des Fahrzeugs verhindert. Es findet also allenfalls ein vernachlässigbar kurzes Rückrollen des Fahrzeugs beim Abbremsen am Berg statt.

Die erfindungsgemäße Scheibenbremse hat den Vorteil, dass ihre Betätigung unabhängig von der Drehrichtung der Bremsscheibe immer in derselben Richtung erfolgt. Die Drehrichtung der Bremsscheibe muss zur Betätigung der erfindungsgemäßen Scheibenbremse nicht bekannt sein.

Die Steigungen der beiden einander entgegengesetzt schräg zur Bremsscheibe verlaufenden Abstützungen für den Reibbremsbelag müssen nicht gleich sein, es kann beispielsweise für die Rückwärtsfahrt durch Wahl einer größeren Steigung der entsprechenden Abstützung eine kleinere Selbstverstärkung der erfindungsgemäßen Scheibenbremse gewählt werden. Auch kann sich die Steigung der schräg zur Bremsscheibe verlaufenden Abstützungen über ihre Länge ändern, so dass die Selbstverstärkung von der Andruckkraft des Reibbremsbelags gegen die Bremsscheibe und damit von der Betätigungskraft der Scheibenbremse abhängig ist. Durch eine sich über die Länge der Abstützungen ändernde Steigung kann beispielsweise eine mit der Betätigungskraft progressiv oder degressiv zunehmende Selbstverstärkung erreicht werden.

Die schräg zur Bremsscheibe verlaufenden Abstützungen können beispielsweise als Schrägflächen am Reibbremsbelag und/oder ortsfest z.B. an einem Bremssattel vorgesehen sein.

Die Betätigung der erfindungsgemäßen Scheibenbremse erfolgt elektromechanisch, die Betätigungseinrichtung weist einen Elektromotor und ein Rotations/Translations-Umsetzungsgetriebe auf.

Die Unteransprüche haben vorteilhafte Ausgestaltungen und Weiterbildungen der im Anspruch 1 angegebenen Erfindung zum Gegenstand.

Gemäß Anspruch 2 deckt der Reibbremsbelag der erfindungsgemäßen Scheibenbremse die Bremsscheibe nur auf einem Teil ihres Umfangs ab, d.h. die Bremsscheibe ist wie bei herkömmlichen, hydraulisch betätigten Scheibenbremsen nur auf einem Teil ihres Umfangs abgedeckt. Diese Ausgestaltung der Erfindung hat den Vorteil, dass eine Wärmeableitung von der Bremsscheibe und auch vom Reibbremsbelag an die Umgebung verbessert ist. Des weiteren ist ein gezieltes Zuleiten von Kühlluft vereinfacht.

### Zeichnung

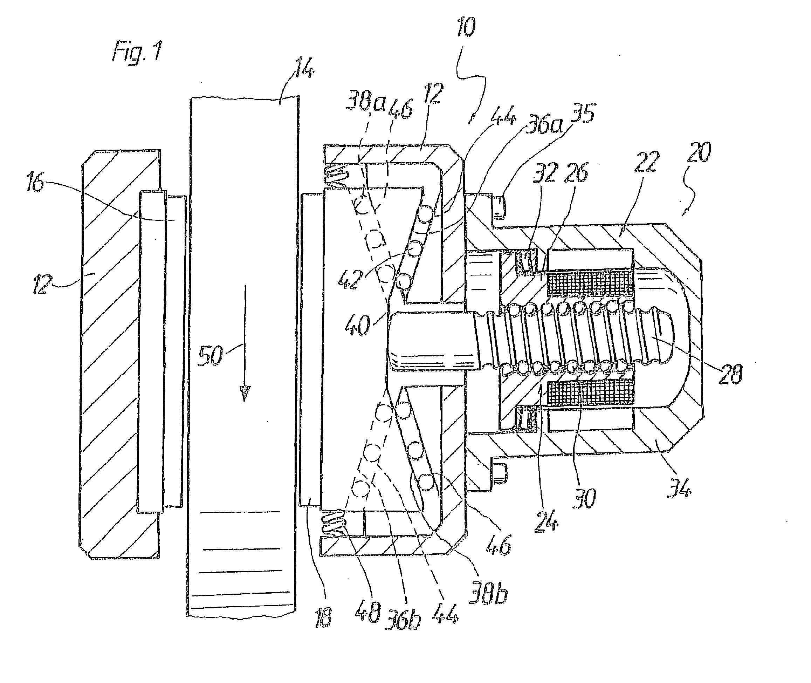

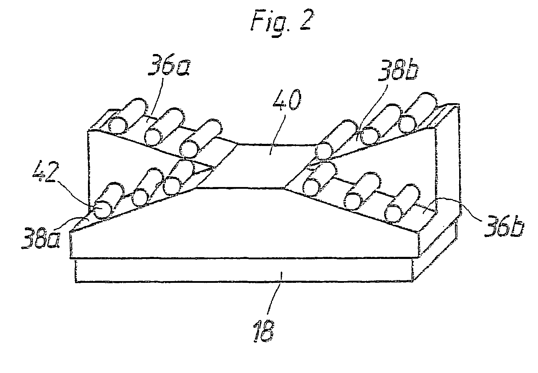

Die Erfindung wird nachfolgend anhand eines in der Zeichnung dargestellten Ausführungsbeispiels näher erläutert. Die einzige Figur zeigt eine erfindungsgemäße Scheibenbremse teilweise geschnitten mit Blickrichtung radial auf eine Bremsscheibe; und Figur 2 eine perspektivische Darstellung eines Reibbremsbelags der Scheibenbremse aus Figur 1.

Die Zeichnung ist als schematisierte und teilweise vereinfachte Darstellung zu verstehen.

### Beschreibung des Ausführungsbeispiels

Die in der Zeichnung dargestellte, erfindungsgemäße, insgesamt mit 10 bezeichnete Scheibenbremse weist einen als Schwimmsattel ausgebildeten Bremssattel 12 auf, in dem beiderseits einer Bremsscheibe 14 zwei Reibbremsbeläge 16, 18 einliegen. Ein in der Zeichnung links dargestellter Reibbremsbelag 16 ist feststehend im Bremssattel 12 aufgenommen, der in der Zeichnung rechts dargestellte Reibbremsbelag 18 ist beweglich. Durch Drücken des beweglichen Reibbremsbelags 18 gegen die Bremsscheibe 14 wird in an sich bekannter Weise der als Schwimmsattel ausgebildete Bremssattel 12 quer zur Bremsscheibe 14 verschoben und drückt den feststehenden Reibbremsbelag 16 gegen die andere Seite der Bremsscheibe 14, so dass beide Reibbremsbeläge 16, 18 eine Bremskraft auf die Bremsscheibe 14 ausüben.

Zum Betätigen der Scheibenbremse 10 d. h. zum Drücken des Reibbremsbelags 18 gegen die Bremsscheibe 14 weist die Scheibenbremse 10 eine Betätigungseinrichtung 20 auf, die einen Elektromotor 22 und ein Rotations/Translations-Umsetzungsgetriebe 24 umfasst. Das Rotations/ Translations-Umsetzungsgetriebe 24 ist im dargestellten Ausführungsbeispiel der Erfindung als reibungsarmer Kugelgewindetrieb ausgebildet, d.h. die Scheibenbremse 10 weist ein Schraubgetriebe als Rotations/Translations-Umsetzungsgetriebe 24 auf.

Der Elektromotor 22 ist ein sog. Hohlwellenmotor, sein Rotor 26 bildet zugleich eine ebenfalls mit 26 bezeichnete Mutter des Kugelgewindetriebs 24. in der Mutter 26 liegt eine Spindel 28 koaxial ein, die über Kugeln 30 in an sich bekannter Weise mit der Mutter 26 in Eingriff steht. Durch rotierenden Antrieb der Mutter 26 ist die Spindel 28 axial verschiebbar. Die Mutter 26 stützt sich über ein Axial-Kegelrollenlager 32 in axialer Richtung in einem Motor- und Getriebegehäuse 34 ab, das mit Schrauben 35 mit dem Bremssattel 12 verbunden ist. Mit dem Kegelrollenlager 32 ist die Mutter 26 des Kugelgewindetriebs 24, die zugleich den Rotor 26 des Elektromotors 22 bildet, drehbar im Motor- und Getriebegehäuse 34 gelagert.

Die Spindel 28 ist rechtwinklig zur Bremsscheibe 14 angeordnet, ihre Verschiebe- und Wirkungsrichtung ist quer zur Bremsscheibe 14. Die Betätigungseinrichtung 20 ist auf einer der Bremsscheibe 14 abgewandten Seite des beweglichen Reibbremsbelags 18 angeordnet, die Spindel 28 liegt mit einem Ende auf der der Bremsscheibe 14 abgewandten Seite des Reibbremsbelags 18 an. Durch rotierenden Antrieb der Mutter 26 wird die Spindel 28 in Richtung der Bremsscheibe 14 verschoben und drückt dabei den beweglichen Reibbremsbelag 18 gegen die eine Seite der Bremsscheibe 14. In oben beschriebener Weise wird über den Bremssattel 12 der feststehende Reibbremsbelag 16 gegen die andere Seite der Bremsscheibe 14 gedrückt und die beiden Reibbremsbeläge 16, 18 üben eine Bremskraft auf die Bremsscheibe 14 aus.

Auf seiner der Bremsscheibe 14 abgewandten Rückseite weist der bewegliche Reibbremsbelag 18 zwei Keilflächen 36, 38 auf, die einander entgegengesetzt schräg zur Bremsscheibe 14 verlaufen (Figur 2). Die Keilflächen 36, 38 weisen in ihrer Mitte eine Unterbrechung in Form einer Abstützfläche 40 auf, an der die Spindel 28 anliegt. Die Abstützfläche 40 unterteilt jede Keilfläche 36, 38 in Teil-Keilflächen 36a, 36b, 38a 38b. Wie in Figur 2 sichtbar sind die von der Abstützfläche 40 unterbrochenen Teil-Keilflächen 36a, 36b, 38a, 38b seitlich versetzt zueinander angeordnet um ein Kippen des Reibbremsbelags 18 zu vermeiden. Die Abstützfläche 40 verläuft parallel zur Bremsscheibe 14. Die einander entgegengesetzt schräg zur Bremsscheibe 14 verlaufenden Keilflächen 36, 38 sind in Bezug auf die Bremsscheibe 14 radial versetzt zueinander angeordnet, in der Zeichnung befinden sich die Keilflächen 36, 38 also übereinander. Verdeckte Teile der Keilflächen 36, 38 sind in der Zeichnung durch Strichlinien angedeutet. Um den Reibbremsbelag 18 kippfrei abzustützen, kann dieser mehrere, in radialer Richtung der Bremsscheibe 14 von einander beabstandete und in einer Ebene liegende Keilflächen 36, 38 aufweisen, so dass sich eine in einer Richtung zur Bremsscheibe 14 schräg verlaufende Keilfläche 36 zwischen zwei in entgegengesetzter Richtung schräg zur Bremsscheibe 14 verlaufenden Keilflächen 38 befindet.

Über Rollen 42 stützen sich die Keilflächen 36, 38 an Gegenflächen 44, 46 ab. Die Gegenflächen 44, 46 sind im Bremssattel 12 ausgebildet, sie verlaufen parallel zu den Keilflächen 36, 38 des Reibbremsbelags 18, d.h. die Gegenflächen 44, 46 verlaufen schräg in einander entgegengesetzten Richtung zur Bremsscheibe 14. Die Keilflächen 36, 38 und die Gegenflächen 44, 46 bilden schräg zur Bremsscheibe 14 verlaufende Abstützungen 36, 38, 44, 46 für den beweglichen Reibbremsbelag 18, die den Reibbremsbelag 18 schräg, d.h. in einem Winkel zur Bremsscheibe 14 verschiebbar führen bzw. im Bremssattel 12 abstützen.

In Umfangsrichtung der Bremsscheibe 14 wird der bewegliche Reibbremsbelag 18 mit zwei als Schraubendruckfedern ausgebildeten Federelemente 48 im Bremssattel 12 abgestützt. Die Funktion der Abstützungen 36, 38, 44, 46 ist folgende: Wird zur Betätigung der erfindungsgemäßen Scheibenbremse 10 der bewegliche Reibbremsbelag 18 mit der Betätigungseinrichtung 20 gegen die drehende Bremsscheibe 14 gedrückt, übt eine Reibung zwischen der Bremsscheibe 14 und dem Reibbremsbelag 18 eine Kraft in Umfangsrichtung der Bremsscheibe 14 auf den Reibbremsbelag 18 aus. Diese Kraft verschiebt den Reibbremsbelag 18 in Umfangsrichtung der Bremsscheibe 14. Dabei gleitet der Reibbremsbelag 18 mit einer in einer Richtung schräg zur Bremsscheibe 14 verlaufenden Keilfläche 36, 38 an der zugeordneten Gegenfläche 44, 46 entlang und wird von dieser schräg auf die Bremsscheibe 14 zu bewegt. Bei einer angenommenen Drehrichtung der Bremsscheibe 14 in Richtung des Pfeils 50 gleitet der Reibbremsbelag 18 mit seiner Keilfläche 36 an der Gegenfläche 44 des Bremssattels 12 entlang. Die Abstützung 44 übt dabei eine Kraft senkrecht zur Bremsscheibe 14 auf den Reibbremsbelag 18 aus, die den Reibbremsbelag 18 zusätzlich zu der von der Betätigungseinrichtung 20 ausgeübten Kraft gegen die Bremsscheibe 14 drückt und dadurch die Bremskraft der Scheibenbremse 10 erhöht. Die schräg zur Bremsscheibe 14 verlaufende Abstützung 36, 44 bewirkt auf diese Weise eine Selbstverstärkung der Scheibenbremse 10.

Bei entgegengesetzter Drehrichtung der Bremsscheibe 14 bewirkt die in entgegengesetzter Richtung schräg zur Bremsscheibe 14 verlaufende Abstützung 38, 46 die vorstehend beschriebene Selbstverstärkung. Die Selbstverstärkung der erfindungsgemäßen Scheibenbremse 10 ist somit unabhängig von der Drehrichtung der Bremsscheibe 14. Durch die Wahl eines Steigungswinkels der Abstützungen 36, 38, 44, 46 kann die Höhe der Selbstverstärkung eingestellt werden. Die Steigung der einander entgegengesetzt schräg zur Bremsscheibe 14 verlaufenden Abstützungen 36, 38, 44, 46 kann verschieden sein um beispielsweise eine für Vor- und Rückwärtsfahrt unterschiedliche Selbstverstärkung zu erreichen.

Im dargestellten und beschriebenen Ausführungsbeispiel der Erfindung ist der Kugelgewindetrieb 24 der Betätigungseinrichtung 20 selbsthemmend ausgebildet, d.h. die Mutter 26 kann durch eine Axialkraft auf die Spindel 28 nicht in Drehung versetzt und die Spindel 28 kann durch eine auf sie ausgeübte Axialkraft nicht axial verschoben werden. Dadurch behält die erfindungsgemäße Scheibenbremse 10 eine aufgebrachte Andruckkraft ihrer Reibbremsbeläge 16, 18 gegen die Bremsscheibe 14 bei stromlosem Elektromotor 22 unverändert bei. Zum Konstanthalten einer aufgebrachten Bremskraft muss der Elektromotor 22 dadurch nicht bestromt werden. Des weiteren lässt sich die erfindungsgemäße Scheibenbremse 10 durch die selbsthemmende Ausbildung ihres Kugelgewindetriebs 24 als Feststellbremse verwenden.

## Patentansprüche

1. Scheibenbremse mit einem Reibbremsbelag (18), mit einer Betätigungseinrichtung (20), mit der der Reibbremsbelag (18) gegen eine Bremsscheibe (14) drückbar ist, wobei die Betätigungseinrichtung (20) quer zur Bremsscheibe (14) auf den Reibbremsbelag (18) einwirkt, **dadurch gekennzeichnet, dass** die Scheibenbremse (10) zwei einander entgegengesetzt schräg zur Bremsscheibe (14) verlaufende Abstützungen (36, 38, 44, 46) für den Reibbremsbelag (18) aufweist, die eine Selbstverstärkung der Scheibenbremse (10) bei beiden Drehrichtungen der Bremsscheibe (14) bewirken, dass sich die Abstützungen (36, 38, 44, 46) in Umfangsrichtung der Bremsscheibe (14) über im Wesentlichen die gesamte Länge des Reibbremsbelags (18) erstrecken, und dass die Betätigungseinrichtung (20) einen Elektromotor (22) und ein Rotations/Translations-Umsetzungsgetriebe (24) aufweist.

2. Scheibenbremse nach Anspruch 1, **dadurch gekennzeichnet, dass** der Reibbremsbelag (18) die Bremsscheibe (14) nur auf einem Teil ihres Umfangs abdeckt.

3. Scheibenbremse nach Anspruch 1, **dadurch gekennzeichnet, dass** die Abstützungen (36, 38, 44, 46) eine Unterbrechung (40) für den Angriff der Betätigungseinrichtung (20) aufweisen.

4. Scheibenbremse nach Anspruch 1, **dadurch gekennzeichnet, dass** die Betätigungseinrichtung (20) einen Elektromotor (22) und ein selbsthemmendes Getriebe (24) aufweist.

## Claims

1. Disc brake having a friction brake lining (18), having an activation device (20) with which the friction brake lining (18) can be pressed against a brake disc (14), the activation device (20) acting on the friction brake lining (18) in the transverse direction with respect to the brake disc (14), **characterized in that** the disc brake (10) has two supports (36, 38, 44, 46) for the friction brake lining (18) which extend obliquely with respect to the disc brake (14) in opposite directions and which bring about self-energizing of the disc brake (10) in both directions of rotation of the brake disc (14), **in that** the supports (36, 38, 44, 46) extend in the circumferential direction of the brake disc (14) over essentially the entire length of the friction brake lining (18), and **in that** the activation device (20) has an electric motor (22) and a rotation/translation conversion gear mechanism (24).

2. Disc brake according to Claim 1, **characterized in that** the friction brake lining (18) covers the brake disc (14) over just part of its circumference.

3. Disc brake according to Claim 1, **characterized in that** the supports (36, 38, 44, 46) have an interruption (40) for the activation device (20) to engage.

4. Disc brake according to Claim 1, **characterized in that** the activation device (20) has an electric motor (22) and a self-locking gear mechanism (24).

## Revendications

1. Frein à disque comportant une garniture de frein (18), une installation d'actionnement (20) qui pousse la garniture de frein à friction (18) contre le disque de frein (14),
l'installation d'actionnement (20) agissant transversalement au disque de frein (14) sur la garniture de frein à friction (18),
**caractérisé en ce que**
le frein à disque (10) présente pour la garniture de frein à friction (18), deux appuis (36, 38, 44, 46) à inclinaison opposée l'une par rapport à l'autre et par rapport au disque de frein (14) produisant un effet d'auto-amplification du frein (10) pour les deux sens de rotation du disque de frein (14),
les appuis (36, 38, 44, 46) s'étendent dans la direction périphérique du disque de frein (14) pratiquement sur toute la longueur de la garniture de frein à friction (18), et
l'installation d'actionnement (20) comporte un moteur électrique (22) et une transmission de conversion rotation/translation (24).

2. Frein à disque selon la revendication 1,
**caractérisé en ce que**
la garniture de frein (18) ne couvre qu'une partie de la périphérie du disque de frein (14).

3. Frein à disque selon la revendication 1,
**caractérisé en ce que**
les appuis (36, 38, 44, 46) ont une partie interrompue (40) pour recevoir l'installation d'actionnement (20).

4. Frein à disque selon la revendication 1,
**caractérisé en ce que**
l'installation d'actionnement (20) comporte un moteur électrique (22) et une transmission autobloquante (24).
